# EUROPEAN PATENT SPECIFICATION

(11) **EP 0 810 118 B1**
(45) Date of publication and mention of the grant of the patent: **14.11.2001**
(21) Application number: 97102718.0
(22) Date of filing: 20.02.1997
(51) Int. Cl.: B60Q 1/38

(54) **Integrated circuit for direction indicator lamp flasher system**
Halbleiteranordnung für Richtungsanzeigerblinkvorrichtung
Circuit intégré pour clignotant d'indicateur de direction

(30) Priority: 29.05.1996 JP 15639296; 29.05.1996 JP 15639396; 29.05.1996 JP 15639496; 29.05.1996 JP 15639596; 29.05.1996 JP 15639696; 29.05.1996 JP 15639796
(43) Date of publication of application: 03.12.1997
(73) Proprietor: Niles Parts Co., Ltd., Tokyo 143 (JP)
(72) Inventor: Sueoka, Toshiaki, c/o Niles Parts Co., Ltd., Ota-ku, Tokyo, 143 (JP)
(74) Representative: Luderschmidt, Schüler & Partner GbR

(56) References cited:
- GB-A- 2 089 594
- US-A- 4 644 318
- PATENT ABSTRACTS OF JAPAN vol. 010, no. 375 (M-545), 13 December 1986 & JP 61 166742 A (NIPPON DENSO CO LTD), 28 July 1986

## Description

The present invention relates to an integrated circuit for periodically controlling a switch circuit in accordance with the precharacterizing portion of claim 1 as well as to a flasher system comprising such an integrated circuit in accordance with the preamble of claim 8.

Cars and other vehicles are provided with a direction indicator lamp flasher system to indicate the direction the driver of the vehicle intends to choose by flashing appropriate direction indicator lamps arranged on the vehicle. Generally such flasher systems include a flasher switch which often has the form of an electrically controlled relay. In such flasher systems erroneous operation of the direction indicator lamps may arise, which is due to noise signals received by an integrated circuit which periodically controls the flasher switch. Such electric noise signals may be due to different sources, e.g. other battery operated devices of the vehicle, especially relays or switches, the contacts of which may produce so-called chattering signals, when experiencing mechanical vibrations. So a vehicle flasher system may erroneously activate direction indicator lamps, when a movable contact member of a relay thereof produces mechanical vibrations during turning ON of this relay or of a direction selection switch, which contact members are used for opening and interrupting an electric circuit supplying electric power to the direction indicator lamps.

In a conventional direction indicator lamp flasher system of this kind, as shown, e.g., by Japanese Unexamined Patent Publication (Kokai) No. S61-166742, reduction of the detrimental effect of electric noise signals is obtained by connecting to the integrated circuit controlling the flasher switch a noise-absorbing capacitor. Furthermore a flash-operation controlling circuit is connected in an electrical circuit extending between a relay and a direction selection switch so that the operating states of the relay and the direction selection switch are detected and used in the control of the operation of the flasher switch driving circuit.

However, if a noise-absorbing capacitor is attached to the integrated circuit as an external component as in the above mentioned prior art flasher system, the noise-absorbing effect largely varies depending, for example, on the pattern or the configuration of the electrically conducting tracks formed on a printed circuit board on which the integrated circuit of the flasher system is arranged, or on the position or site, where the noise-absorbing capacitor is attached to the printed circuit board. Due to this fact, the design of patterning must be done in a cut-and-try manner. Thus there is the problem that development of the flasher system needs many developing steps or cycles. Also there have been cases, where a capacitor with a relatively large capacitance is required to enhance the noise-absorbing effect. Furthermore, chattering signals may occur due to mechanical vibration in a movable contact member during turning ON of a contact of a relay or a turn-signal switch for opening and closing a feed circuit supplying electric power to the direction indicator lamps. There is also the problem that the direction indicator lamp flasher system may erroneously operate due to the already mentioned chattering signals.

The present invention envisages to solve the above mentioned problems, and it is an object of the present invention to provide an integrated circuit in accordance with the preamble of claim 1, wherein the effect of noise reduction is not changed by patterning the configuration of a printed circuit board on which the integrated circuit is arranged.

The above object is solved by an integrated circuit for periodically controlling a switch circuit, comprising the features enumerated in claim 1.

If an integrated circuit in accordance with claim 1 is used, the patterning of the electrically conducting tracks of a circuit board mounting the integrated circuit can be freely carried out. Thus the respective application, i.e. a flasher system including this integrated circuit can be developed in short time. Furthermore there is no need of externally attaching a capacitor to the integrated circuit for obtaining noise reduction.

It is another object of the present invention to provide an integrated circuit, especially for a direction indicator lamp flasher system, which is free from the defect of unstable operation of an oscillating section thereof due to the fact that the latter becomes susceptible to noise upon the charging of discharging voltage of a capacitor approaching a threshold voltage, which is used by a comparator incorporated in the oscillating section of the integrated circuit and operates by comparing the inversed threshold voltage transmitted from a reference voltage source to the charging or discharging voltage of a capacitor of an externally attached circuit or group of components defining the perdiod of the oscillating section.

It is a further object of the present invention to provide an integrated circuit or a direction indicator lamp flasher system, wherein the direction indicator lamp flasher system is free from erroneous operation even if a chattering signal is generated due to mechanical vibration of a movable contact piece during turning ON of a contact of a relay or a turn-signal switch used for opening and closing the feed circuit supplying electric power to the direction indicator lamps.

Further advantageous improvements of the invention are referred to in dependent claims.

The invention will now be described in more details by way of preferred embodiments thereof and referring to the enclosed drawings. Therein
- Figure 1:: is an electric circuit diagram showing a direction indicator lamp flasher'system in accordance with the present invention; and
- Figure 2:: is a time chart for explaining the flasher system shown in figure 1, wherein part diagram (1) shows signal levels at points (b) or (c) of figure 1, part figure (2) shows signal levels at point (d) of figure 1, part diagram (3) shows signal levels at point (e) of figure 1, and part diagram (4) shows operating states of a turn-signal or direction selection switch.

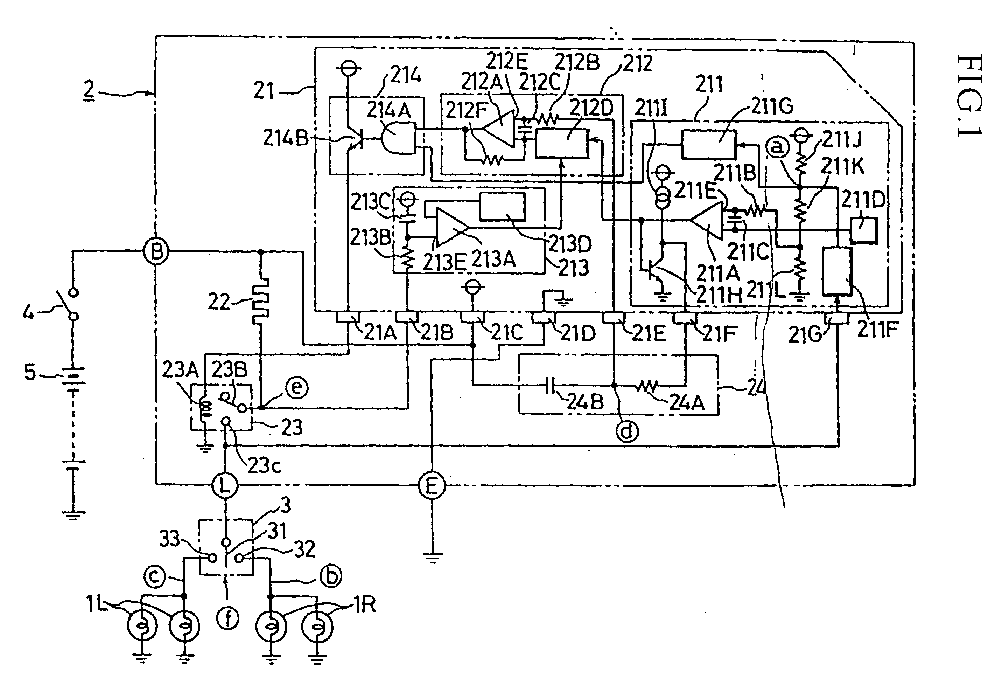

Reference is now made to figure 1. On the right and left sides of a vehicle body direction indicator lamps 1R, 1L are provided respectively. A turn-signal switch 3 (direction selection switch) is turned ON/OFF, when a selection lever (not shown) is tilt-operated. The turn-signal switch 3 is formed by a movable contact piece 31, a right-side contact 32 and a left-side contact 32. The movable contact piece 31 is connected to a flasher system 2 in the form of a relay having a right-side contact 32 and a left-side contact 33, which are connected respectively to the right and left direction indicator lamps 1R, 1L. The turn-signal switch 3 constitutes a combination switch body in collective of various other operating switches such as a lighting-system operating switch and a wiper-system operating switch. The combination switch body has a flasher system 2 incorporated therein.

The flasher system 2 is connected in an electricity-feed circuit leading to the direction indicator lamps 1R, 1L of the vehicle, so that it periodically opens and closes the electricity-feed circuit to cause the direction indicator lamps 1R, 1L to flash. The flasher system 2 is formed by an integrated circuit 21, an electric-current detecting resistance 22, a relay 23, and an externally-attached element group 24.

The integrated circuit 21 is an integrated circuit generally referred to as a flasher IC, and has a switch inputting section 211, an oscillating section 212, a lamp circuit-breakage detecting section 213, and an outputting section 214 incorporated therein. The switch inputting section 211 to the outputting section 214 are then explained. Firstly, the switch inputting section 211 serves for transmitting signals to the oscillating section 212, the outputting section 214, and the externally-attached element group 24 in dependence on the operating state of the turn-signal switch 3. The switch inputting section 211 is configured by connection between the comparator 211A, a resistance 211B for noise filtering, a capacitor 211C, a reference power source 211D, a delay circuit 211F, a switch-state detecting circuit 211G, a transistor 211H, a constant-current source 211I, and resistances 211J - 211L for voltage division.

The switch inputting section 211 is further described in detail. The comparator 211A has a terminal end 211E in a non-inverted input end to which the resistance 211B and the capacitor 211C are provided so as to constitute a noise filter for eliminating noise being entering the comparator 211A. In this relation, the capacitor 211C utilizes parasitic capacitance created between the conductor circuits which are internally adjacent in the integrated circuit 21. Also, the integrated circuit 21 has a terminal 21G to which the delay circuit 211F is connected to prevent against intrusion of chattering signals incurring upon operating the turn-signal switch 3 or the relay 23, thereby preventing against erroneous operation for the switch inputting section 211.

The switch-state detecting circuit 211G outputs a "0" level potential when the turn-signal switch 3 is OFF (open), and a "1" level potential when the turn-signal switch 3 is ON (close) . More specifically, the switch-state detecting circuit 211G is comprised of so-called a wind-comparator circuit. When the turn-signal switch 3 is turned ON to thereby bring the potential at a junction (a) between the resistance 211J and the resistance 211K from a "0" level to a "1" level, the switch-state detecting circuit 211G transmits a "1" level potential to the outputting section 214. Also, when the turn-signal switch 3 is turned OFF to bring the potential at the junction (a) to an intermediate potential set by the resistances 211J - 211L, the switch-state detecting circuit 211G transmits a "0" level potential to the outputting section 214.

The comparator 211A also has an inverted input end to which the reference voltage source 211D is connected. The output end of the comparator 211A is connected to a base of the transistor 211H and to the oscillating section 212. The transistor 211H has a collector connected to a terminal 21F of the integrated circuit 21 with an emitter connected to the ground.

Then, the oscillating section 212 is explained. The oscillating section 212 oscillates in cooperation with the transistor 211H of the switch inputting section 211 and the externally-attached element group 24. The oscillating section 212 is configured by connection between a comparator 212A, a resistance 212B for filtering noise, a capacitor 212C, a reference voltage source 212D, and a hysteresis setting element 212F.

The oscillating section 212 is further described in detail. The comparator 212A has a terminal end 212E in a non-inverted input end to which a resistance 212B and a capacitor 212C are provided so as to constitute a noise filter, thereby preventing against noise being entering the comparator 212A. The resistance 212B is connected to a terminal 21E of the integrated circuit 21. In this connection, the capacitor 212C utilizes parasitic capacitance created between the conductor circuits which are internally adjacent in the integrated circuit 21, similarly to the capacitor 211C.

Also, the comparator 212A has a inverted input end to which the reference voltage source 212D is connected. The reference voltage source 212D inputs a first threshold voltage TH1 or a second threshold voltage TH2 to the inverted input end of the comparator 212A in dependence on an input signal from the switch inputting section 211. The reference voltage source 212D, when inputted with a circuit-breakage detecting signal from the lamp circuit-breakage detecting section 213, alters the second threshold voltage TH2 to a third threshold voltage TH3 which is inputted to the inverted input of a comparator 212A. Thus, the reference voltage source 212D is configured of circuit so as to shorten the period of oscillation by the oscillating circuit 212 upon being inputted with a circuit-breakage detecting signal. Incidentally, the threshold voltages TH1, TH2, and TH3 are set in a relation in level of TH1 > TH2 > TH3.

The output end of the comparator 212A is connected to the outputting section 214, and connected by feedback to the inverted input end of the comparator 212A via a hysteresis setting element 212F, thereby stabilizing the oscillation.

Then, the lamp circuit-breakage detecting circuit 213 is explained. The lamp circuit-breakage detecting circuit 213 detects the drop of voltage across the electric-current detecting resistance 22. When the level of the voltage drop comes to a predetermined level or below, the lamp circuit-breakage detecting circuit 213 determines as a circuit breakage in a direction indicator lamp 1R, 1L and transmits a "1" level of a circuit-breakage detecting signal to the oscillating section 212. The lamp circuit-breakage detecting circuit 213 is configured by the connection of a comparator 213A, a resistance 213B for filtering noise, a capacitor 213C, and a reference voltage source 213D.

The lamp circuit-breakage detecting circuit 213 is further described in detail. The comparator 213A has a terminal 213E in a non-inverted input end to which the resistance 213B and the capacitor 213C is provided for elimination of noise being entering the comparator 213A. The resistance 213B is connected to a terminal 21B of the integrated circuit 21. In this connection, the capacitor 213C utilizes parasitic capacitance created between the conductor circuits which are internally adjacent in the integrated circuit 21, similarly to the capacitor 211C.

Also, the comparator 213A has an inverted input end to which the reference voltage source 213D is connected. The reference voltage source 213D generates a threshold voltage having a characteristic to meet the voltage-current characteristic for the direction indicator lamps 1R, 1L. The reference voltage source 213D is configured of its circuit by combining a linear element, not shown, and a resistance. The output end of the comparator 213A is connected to the oscillating section 212.

Then, the outputting section 214 is explained. The outputting section 214 operates to actuate the relay 23 by receiving signals respectively transmitted from the switch inputting section 211 and the oscillating section 212. The outputting section 214 is configured by connecting an AND gate 214A and a transistor 214B. The outputting section 214 is further detailed. The AND gate 214A has input terminals respectively connected to the switch inputting section 211 and the oscillating section 212, and an output end connected to a base of a transistor 214B. The transistor 214B has an emitter connected to a terminal 21A of the integrated circuit 21. Incidentally, the terminal 21C of the integrated circuit 21 is a positive-pole power source terminal, while the terminal 21D is a negative-pole power source terminal.

The integrated circuit 21 configured as above is connected to other elements forming the flasher system 2, that is, the electric-current detecting resistance 22, the relay 23, and externally-attached element group 24. These parts are explained below. Firstly, the electric-current detecting resistance 22 is formed by a low resistance for obtaining the drop of voltage of approximately 100 [mV] proportional to the electric current flowing through the direction indicator lamp 1R, 1L. The electric-current detecting resistance 22 has one end connected to a terminal B of the flasher system 2 and a terminal 21C of the integrated circuit 21, and the other end connected to the relay 23 and a terminal 21B of the integrated circuit 21.

The relay 23 operates to open and close the electricity feed circuits leading to the direction indicator lamps 1R, 1L by receiving an exciting current transmitted from the integrated circuit 21. The relay 23 is formed by a coil 23A, a movable contact piece 23B, and a fixed contact 23C. The coil 23A has one end connected to a terminal 21A of the integrated circuit 21 and the other end being grounded. The movable contact piece 23B is connected to the electric-current detecting resistance 22, while the fixed contact 23C is connected to a terminal L of the flasher system 2 and a terminal 21G of the integrated circuit 21G.

The externally-attached element group 24 operates to set the oscillating period by the oscillating section 212 based on the time constant multiplied of the resistance value of the resistance 24A by the capacitance of the capacitor 24B. The resistance 24A has one end and the other end respectively connected to a terminal 21F and a terminal 21E of the integrated circuit. The capacitor 24B has one end and the other end respectively connected to a terminal 21E and 21C of the integrated circuit 21. Incidentally, a terminal 21D of the integrated circuit 21 is connected to a terminal E of the flasher system 2.

The flasher system configured as above has a terminal B connected to a positive pole of the direct-current power source 5 via an ignition switch 4, and a terminal L connected to the direction indicator lamps 1R, 1L via the turn-signal switch 3, with a terminal E grounded.

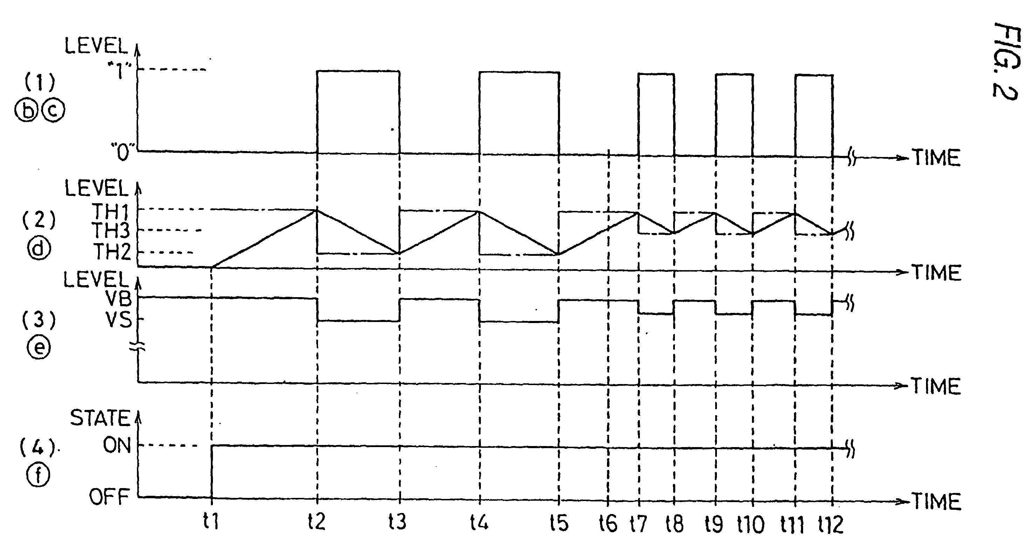

Then, the operation of the above embodiment is explained using a time chart shown in Fig. 2. With the ignition switch firstly turned ON, if the turn-signal switch 3 is in an OFF state, the potential at the point (a) in the switch inputting section 211 comes to an intermediate potential divided by the resistances 211J - 211L so that the switch-state detecting circuit 211G transmits a potential of a "0" level to the outputting section 214. Accordingly, in this state, the AND gate 214A of the outputting section 214 has an output of a "0" level and the transistor 214B is OFF. As a consequence, no exciting current flows through the coil 23A of the relay 23, and hence the movable contact piece 23B will not connect to the fixed contact 23C.

Then, if the turn-signal switch 3 is rightward operated ON at time t1 as shown in (4) of Fig. 2, the potential at the point (a) is brought to a "0" level immediately after the ON operation, and accordingly the switch-state detecting circuit 211G transmits a potential of a "1" level to the outputting section 214. On this occasion, the comparator 211A at its non-inverted input end goes to a "0" level to give a "0" level at the output end, and the transistor 211H is turned OFF. This causes inversion in the terminal 21F of the integrated circuit 21 to the "1" level, so that the capacitor 24B of the externally-attached element group 24 start discharging and accordingly the potential at the point (d) shown in Fig. 1 begins to rise at the time t1, as shown in (2) of Fig. 2.

When the potential at the point (d) reaches a first threshold level TH1 transmitted by the reference voltage source 212D, the output end of the comparator 212A in the oscillating section 212 is inverted to a "1" level. As a result, the AND gate 214A has an output of a "1" level to turn the transistor 214B ON, so that an exciting current flows through the coil 23A of the relay 23 to thereby connect the movable contact piece 23B to the fixed contact 23C. To this end, the potential at the point (b) shown in Fig. 1 becomes a "1" level at time t2 as shown in (1) of Fig. 2, to thereby turn on the direction indicator lamp 1R of the right side and bring the terminal 21G of the integrated circuit 21 to a "1" level.

At the time t2, when the potential at the terminal 21G of the integrated circuit 21 becomes the "1" level, the potential at the point (a) also comes to a "1" level. As a result, the switch-state detecting circuit 211G remains to transmit the "1" level potential to the outputting section 214. The comparator 211A at this time has a "1" level in the non-inverted input end so that the output end thereof becomes a "1" level to turn the transistor 211H ON. This causes the terminal 21F of the integrated circuit 21 to be inverted to a "0" level, so that the capacitor 24B of the externally-attached element group 24B starts charging and accordingly the potential at the point (d) begins to lower at the time t2 as shown in (2) of Fig. 2. Simultaneously, the reference voltage source 212D of the oscillating section 212 is inputted with the "1" level signal from the comparator 211A, so that the reference voltage source 212D transmits a second threshold voltage TH2.

When the potential at the point (d) reaches the second threshold voltage TH2 transmitted by the reference voltage source 212D at time t3 as shown in (2) of Fig. 2, the output end of the comparator 212A in the oscillating section 212 is inverted to a "0" level. As a consequence, the output of the AND gate 214A of the outputting section 214 becomes a "0" level to turn OFF the transistor 214B, so that no exciting current flows through the coil 23A of the relay 23 and accordingly the movable contact piece 23B is disconnected from the fixed contact 23C. As a result, the potential at the point (b) shown in Fig. 1 becomes a "0" level at t3 as shown in (1) of Fig. 2, so that the direction indicator lamp 1R of the right side goes off and the terminal 21G of the integrated circuit 21 is brought to a "0" level. Thereafter, the direction indicator lamp 1R of the right side is placed into flashing at a constant period by the similar operating manner.

If the right-side direction indicator lamp 1R at least one is broken of circuit at time t6, there is reduction of voltage drop across the current-detecting resistance 22 and accordingly the potential VS at the point (e) rises as shown in (3) of Fig. 2 to approach a potential VB at the terminal B of the flasher system 2. Thereupon, the potential at the non-inverted input end of the comparator 213A in the lamp-circuit-breakage detecting section 213 rises higher than the threshold potential transmitted by the reference voltage source 213D, to thereby cause the comparator 213A to transmit a "1" level signal. The reference voltage source 212D of the oscillating section 212, upon being inputted with the "1" level signal from the comparator 213A, alters the second threshold voltage TH2 to a third threshold voltage TH3.

Accordingly, when the potential at the point (d) reaches the third threshold potential at time t8, time t10, and time 12 as sown in (2) of Fig. 2, the direction indicator lamp 1R of the right side goes off. In brief, if the direction indicator lamp 1R is broken of circuit, the period of flashing by the direction indicator lamp 1R becomes short to thereby notify the driver, etc. on the vehicle that the direction indicator lamp 1R is circuit-broken. Incidentally, although the above operational explanation is made on the case where the turn-signal switch 3 is rightward operated ON, the direction indicator lamp 1L of the left side likewise goes to flashing on a constant period when the switch leftward operated ON. In this case, the waveform at the point (C) shown in figure 1 assumes one as shown in (1) of figure 2, similarly to the wave form at the point (D) stated before.

From the above description of a preferred embodiment of the invention the below properties of the invention are seen:

The various subunits of the integrated circuit 21 (switch position inputting section 211, oscillating section 212, burn-out detecting section 213) each include a signal processing circuit in the form of a comparator (211A, 212A, 213A). Noise absorbing means are connected to these different signal processing circuits, which are physically adjacent to the associated processing circuit.

One embodiment of such noise signal absorbing means is disclosed in connection with the signal position inputting section 211 and comprises a delay circuit 211 arranged between the signal input of the section and the input of the signal processing circuit 211A. Actually the output of the delay circuit 211F is connected to one of the input terminals of the signal processing circuit 211A via the voltage divider circuit formed by resistors 211B and resistors 211J, 211K, 211L.

All the three signal processing sections 211, 212 and 213 include noise signal absorbing means in the form of a RC-filter being connected to the input side of the solid state signal processing circuit (211A, 212A, 213A), the capacitor of this filter being formed by the capacitance of tracks of the printed circuit board which are physically adjacent to the respective signal processing circuit.

Another type of noise signal absorbing means is shown in connection with the oscillating section 211, i.e. a hysteresis element (formed by resistor 212F) interconnecting the output terminal and one of the input terminals of the signal processing circuit (212A).

Due to the provision of these signal absorbing means, each of the signal processing sections 211, 212, 213 is free from erroneous operation due to noise signals, e.g. chattering signals which are generated due to mechanical vibration of a movable contact piece during turning ON of a relay (e.g. flasher switch 23) or a mechanical switch (e.g. the turn-signal switch 3).

This means that the switch position inputting section 211 provides output signals, which truly reflect the general output signal of the flasher switch 23. The oscillator section 212 provides a true rectangualar voltage pattern free from spurious components and the burn out detecting section 213 provides a constant high or low level output signal indicating correct function of the direction indicator lamps or failure of one of these lamps, which also is free from higher frequency components.

Thus the overall flasher system is free from erroneous operation due to noise signals, particularly due to chattering of the movable contact 23B of the relay 23 closing or due to the movable contact 31 of the direction selection switch 3 entering into engagement with one of the stationary contacts 32, 33 of the direction selection switch.

The above correct working of the integrated circuit 21 even in the presence noise signals is obtained without using an external capacitor. Since the RC-filters absorbing noise signals are physically adjacent to each of the signal processing circuits (comparators), their characteristics are not influenced by the pattern of conductive tracks used to connect the respective signal processing circuit with an input terminal of the integrated circuit or with another signal processing section, which precedes the signal processing section considered as seen in the direction of signal flow. Due to this fact the pattern of the conductive tracks of the printed circuit need not be optimized in view of noise signal absorbtion, which greatly facilitates design of the printed circuit and thus considerably reduces the overall time required for design.

## Claims

1. An integrated circuit for periodically controlling
a switch circuit (23) between its open and closed states, particularly for use in a direction indicator lamp flasher system (1-3), comprising at least one signal processing circuit (211A; 212A; 213A) which is connectable to an input line supplying the signal to be processed together with noise signals and comprising noise signal reduction means associated to the integrated circuit (21), **characterized in that** the noise signal reduction means (211B, 211C; 211F; 212B, 212C; 212F; 213B, 213C) is connected to an input terminal of the signal processing circuit (211A; 212A, 213A) and is located adjacent to the signal processing circuit forming an internal part of the integrated circuit (21).

2. The integrated circuit in accordance with claim
1, **characterized in that** the noise signal reduction means comprises a filter circuit (211B, 211C; 212B, 212C; 213B, 213C).

3. The integrated circuit in accordance with claim
2 **characterized in that** the filter circuit is RC-filter circuit (211B, 211C; 212B, 212C; 213B, 213C), the capacitor thereof preferably being formed by a parasitic capacitance formed by electrically conducting tracks, e.g. of a printed circuit board carrying the signal processing circuit (211A; 212A; 213A), which electrically conducting tracks are located adjacent to the signal processing circuit.

4. The integrated circuit in accordance with one of
claims 1 to 3, **characterized in that** the noise reduction means, comprises a hysteresis element (212F), e.g. a resistor, one terminal of which is connected to an output terminal of the signal processing circuit (212A) and a second terminal of which is connected to an input terminal of the signal processing circuit (212A).

5. The integrated circuit in accordance with one of
claims 1 to 5, **characterized in that** the noise reduction means comprises a delay circuit (211F) connected to an input of the signal processing circuit (211A).

6. The integrated circuit in accordance with one of
claims 1 to 6, **characterized in that** the signal processing circuit (211A, 212A, 213A) is formed by a solid state semiconductor component.

7. The integrated circuit in according with one of
claim 1, **characterized in that** the signal processing circuit (211A; 212A; 213A) comprises a comparator.

8. A flasher system comprising at least one integrated
circuit (21) in accordance with one of claims 1 to 7, a flasher switch (23) controlled thereby, a direction selection switch (3) arranged in series with the flasher switch (23), two sets of direction indicator lamps (1R, 1L) connected to one of two output terminals of the direction selection switch (3), respectively, and power supply means (5), one terminal of which is connected to the input terminal of the flasher switch (23) and the other terminal of which is connected to the direction indicator lamps (1R, 1L), **characterized in that** the integrated circuit (21) comprises an oscillator circuit (212) and a flasher switch state detecting circuit (211) providing an output signal upon actuation of the direction selection switch (3) and **in that** at least one of the oscillator circuit (212) and the flasher switch state detection circuit (211) comprises a signal processing circuit (211A; 212A) and noise reduction means (211B, 211C; 211; 212B, 212C; 212F) associated thereto and being physically located adjacent thereto.

9. The flasher system in accordance with claim 9,
**characterized in that** it comprises current sensing means (22) connected in series with the flasher switch (23) and a lamp failure detecting circuit (213) an input terminal of which is connected to an output of the current sensing means (22) and an output terminal of which is connected to a frequency control terminal of the oscillating circuit (212) and **in that** the lamp failure detecting circuit (213) comprises a signal processing circuit (213A) and noise reduction means (213B, 213C) associated thereto and physically located adjacent thereto.

10. The flasher system as in claim 9 or 10, **characterized**
**in that** the signal processing circuit (212A) of the oscillator circuit (212) is a comparator one input of which is connected to the junction between a capacitor (24B) and a resistor (24A) of a RC-timer circuit (24), a first end of which is connected to the first terminal of the power supply means (5) being formed as a DC power supply and a second end of which is connectable to the second terminal of the power supply means (5) via a grounding switch (211A) controlled in accordance with the signal output from the flasher switch (23), the second input terminal of the signal processing circuit (212A) of the oscillator circuit (212) being connected to a controllable reference signal source (212D) and in that a control terminal of the reference signal source (212D) is connected to the output of the lamp failure detecting circuit (213).

11. The flasher system as in claim 9 or 10, **characterized**
**in that** a second control terminal of the controllable reference signal source (212D) is connected to an output terminal of the flasher switch state detecting circuit (211).

12. The flasher system as in one of claims 8 to 11,
**characterized in that** the flasher switch (23) is controlled in accordance with an output signal provided by an AND-gate (214A), a first input terminal of which is connected to the output of the oscillator circuit (212) and a second input terminal of which is connected to an output terminal of the flasher switch state detecting circuit (211).

## Patentansprüche

1. Integrierte Schaltung zur periodischen Steuerung eines Schalterstromkreises (23) zwischen dessen Öffnungs- und Schließungsstellung, insbesondere zur Verwendung in einer Blinkvorrichtung für eine Richtungsanzeigelampe (1-3), umfassend mindestens einen Signalverarbeitungsschaltkreis (211A; 212A; 213A), der an einer das zu verarbeitende Signal zusammen mit Rauschsignalen zuführenden Eingabeleitung anschließbar ist, und umfassend eine der integrierten Schaltung (21) zugeordnete Vorrichtung zur Rauschsignalverringerung, **dadurch gekennzeichnet, dass** die Vorrichtung zur Rauschsignalverringerung (211B; 211C; 211F; 212B, 212C; 212F; 213B; 213C) an einen Eingabeanschluss des Signalverarbeitungsschaltkreises (211A; 212A; 213A) angeschlossen ist und in Nachbarschaft zu dem ein Innenteil der integrierten Schaltung (21) bildenden Signalverarbeitungsschaltkreis liegt.

2. Integrierte Schaltung gemäß Anspruch 1, **dadurch gekennzeichnet**, das die Vorrichtung zur Rauschsignalverringerung einen Filterschaltkreis (211 B; 211C; 212B; 212C; 213B; 213C) umfasst.

3. Integrierte Schaltung gemäß Anspruch 2, **dadurch gekennzeichnet, dass** der Filterschaltkreis ein RC-Filterschaltkreis (211B; 211C; 212B; 212C; 213B; 213C) ist, wobei dessen Kondensator vorzugsweise durch eine Parasitärkapazität gebildet wird, die durch elektrische Leiterbahnen, z.B. auf einer Leiterplatte, welche den Signalverarbeitungsschaltkreis (211A; 212A; 213A) trägt, gebildet ist, wobei die elektrischen Leiterbahnen dem Signalverarbeitungsschaltkreis benachbart liegen.

4. Integrierte Schaltung gemäß einem der Ansprüche 1 bis 3, **dadurch gekennzeichnet, dass** die Vorrichtung zur Rauschverminderung ein Hysterese-Element (212F) wie z.B. einen Widerstand, umfasst, von dem ein Anschluss mit einem Abgabeanschluss des Signalverarbeitungsschaltkreises (212A) und ein zweiter Anschluss mit einem Eingababschluss des Signalverarbeitungsschaltkreises (212A) verbunden sind.

5. Integrierte Schaltung gemäß einem der Ansprüche 1 bis 5, **dadurch gekennzeichnet, dass** die Vorrichtung zur Rauschverringerung einen Verzögerungsschaltkreis (211F) umfasst, welcher an die Eingabe des Signalverarbeitungsschaltkreises (211A) angeschlossen ist.

6. Integrierte Schaltung gemäß einem der Ansprüche 1 bis 6, **dadurch gekennzeichnet, dass** der Signalverarbeitungsstromkreis (211A; 212A; 213A) durch eine Festzustand-Halbleiterkomponente gebildet wird.

7. Integrierte Schaltung gemäß einem der vorhergehenden Ansprüche, **dadurch gekennzeichnet, dass** der Signalverarbeitungsstromkreis (211A; 212A; 213A) einen Komparator umfasst.

8. Blinkvorrichtung, umfassend mindestens eine integrierte Schaltung (21) gemäß einem der Ansprüche 1 bis 7, einen hierdurch gesteuerten Blinkschalter (23), einen in Reihe mit dem Blinkerschalter (23) geschalteten Richtungsauswahlschalter (3), zwei Sätze Richtungsanzeigelampen (1R, 1L), die jeweils an einen von zwei Abgabeanschlüssen des Richtungsauswahlschalter (3) angeschlossen sind, und eine Vorrichtung für die Energiezufuhr (5), von der ein Anschluss mit dem Eingabeanschluss des Blinkerschalters (23), und der andere Anschluss derselben mit den Richtungsanzeigelampen (1R, 1L) verbunden sind, **dadurch gekennzeichnet, dass** die integrierte Schaltung (21) einen Schwingungsschaltkreis (212) und einen die Stellung des Blinkerschalters erkennenden Schaltkreis (211) umfasst, welcher bei Betätigung des Richtungsauswahlschalters (3) ein Abgabesignal liefert, sowie dadurch, dass mindestens einer des Schwingungsschaltkreises (212) und des Schaltkreises (211) zur Erkennung der Stellung des Blinkerschalters einen Signalverarbeitungsschaltkreis (211A; 212A) und eine Vorrichtung zur Rauschverringerung (211B; 211C; 211; 212B, 212C; 212F) umfasst, welche diesem zugeordnet ist und zu diesem physikalisch benachbart liegt.

9. Blinkvorrichtung gemäß Anspruch 9, **dadurch gekennzeichnet, dass** sie eine Stromabtastvorrichtung (22), die mit dem Blinkerschalter (23) in Reihe geschaltet ist, und einen, einen Lampenausfall erkennenden Stromkreis (213) umfasst, von dem ein Eingabeanschluss an die Abgabe der Stromabtastvorrichtung (22), und ein Abgabeanschluss desselben an einen Frequenzsteuerungsanschluss des Schwingungsschaltkreises (212) angeschlossen sind, sowie dadurch, dass der Lampenausfall erkennende Schaltkreis (213) einen Signalverarbeitungsschaltkreis (213A) und eine diesem zugeordnete Rauschverminderungsvorrichtung (213B; 213C) umfasst, welche in physikalischer Nachbarschaft zu diesem liegt.

10. Blinkvorrichtung gemäß Anspruch 9 oder 10, **dadurch gekennzeichnet, dass** der Signalverarbeitungsstromkreis (212A) des Schwingungsschaltkreises (212) ein Komparator ist, von dem eine Eingabe an dem Verbindungspunkt zwischen dem Kondensator (24B) und dem Widerstand (24A) eines RC-Timerschaltkreises (24) angeschlossen ist, dessen erstes Ende mit dem ersten Anschluss der Energiezufuhrvorrichtung (5) verbunden ist, welche als Gleichstrom-Energiezufuhr ausgebildet ist, und dessen zweites Ende an dem zweiten Anschluss der Energiezufuhrvorrichtung (5) über einen Erdungsschalter (211A) anschließbar ist, der in Übereinstimmung mit der Signalabgabe aus dem Blinkerschalter (23) gesteuert wird, wobei der zweite Eingabeanschluss des Signalverarbeitungsschaltkreises (212A) des Schwingungsschaltkreises (212) an eine kontrollierbare Bezugssignalquelle (212D) angeschlossen ist, sowie dadurch, dass ein Steueranschluss der Bezugssignalquelle (212D) mit der Abgabe des Schaltkreises (213) zur Erkennung eines Lampenausfalls verbunden ist.

11. Blinkvorrichtung gemäß Anspruch 9 oder 10, **dadurch gekennzeichnet, dass** der zweite Steueranschluss der steuerbaren Bezugssignalquelle (212D) mit einem Abgabeanschluss des Stromkreises (211) zur Erkennung der Stellung des Blinkerschalters verbunden ist.

12. Blinkvorrichtung gemäß einem der Ansprüche 8 bis 11, **dadurch gekennzeichnet, dass** der Blinkerschalter (23) in Übereinstimmung mit einem von einem UND-Gatter (214A) bereitgestellten Abgabesignal gesteuert wird, dessen erster Eingabeanschluss an der Abgabe des Schwingungsstromkreises (212) angeschlossen ist, und dessen zweiter Eingabeanschluss an dem Ausgabeabschluss des Schaltkreises (211) zur Erkennung der Stellung des Blinkerschalters angeschlossen ist.

## Revendications

1. Circuit intégré destiné à commander de façon périodique un circuit commutateur (23) entre ses états ouvert et fermé, destiné en particulier à une utilisation dans un système de clignotant à lampes indicatrices de direction (1 à 3), comprenant au moins un circuit de traitement de signal (211A ; 212A ; 213A) qui peut être relié à une ligne d'entrée fournissant le signal à traiter en même temps que des signaux de bruit et comprenant un moyen de réduction de signaux de bruit associé au circuit intégré (21), **caractérisé en ce que** le moyen de réduction de signaux de bruit (211B, 211C ; 211F ; 212B, 212C ; 212F ; 213B, 213C) est relié à une borne d'entrée du circuit de traitement de signal (211A ; 212A ; 213A) et est situé de façon adjacente au circuit de traitement de signal en formant une partie interne du circuit intégré (21).

2. Circuit intégré selon la revendication 1, **caractérisé en ce que** le moyen de réduction de signaux de bruits comprend un circuit de filtre (211B, 211C ; 212B, 212C ; 213B, 213C).

3. Circuit intégré selon la revendication 2, **caractérisé en ce que** le circuit de filtre est un circuit de filtre RC (211B, 211C ; 212B, 212C ; 213B, 213C), le condensateur de celui-ci étant de préférence formé par une capacité parasite formée par des pistes électriquement conductrices, par exemple d'une carte de circuit imprimé portant le circuit de traitement de signal (211A ; 212A ; 213A), lesquelles pistes électriquement conductrices sont situées de façon adjacente au circuit de traitement de signal.

4. Circuit intégré selon l'une des revendications 1 à 3, **caractérisé en ce que** le moyen de réduction de bruit comprend un élément d'hystérésis (212F), par exemple une résistance, dont une première borne est reliée à une borne de sortie du circuit de traitement de signal (212A) et dont une seconde borne est reliée à une borne d'entrée du circuit de traitement de signal (212A).

5. Circuit intégré selon l'une des revendications 1 à 4, **caractérisé en ce que** le moyen de réduction de bruit comprend un circuit à retard (211F) relié à une entrée du circuit de traitement de signal (211A).

6. Circuit intégré selon l'une des revendications 1 à 5, **caractérisé en ce que** le circuit de traitement de signal (211A ; 212A ; 213A) est formé par un composant monolithique semiconducteur.

7. Circuit intégré selon l'une des revendications 1 à 6, **caractérisé en ce que** le circuit de traitement de signal (211A ; 212A ; 213A) comprend un comparateur.

8. Système de clignotant comprenant au moins un circuit intégré (21) selon l'une des revendications 1 à 7, un commutateur de clignotant (23) commandé par celui-ci, un commutateur de sélection de direction (3) disposé en série avec le commutateur de clignotant (23), deux jeux de lampes indicatrices de direction (1R, 1L) reliés à l'une de deux bornes de sortie du commutateur de sélection de direction (3), respectivement, et un moyen d'alimentation en énergie (5), dont une première borne est reliée à la borne d'entrée du commutateur de clignotant (23) et dont l'autre borne est reliée aux lampes indicatrices de direction (1R, 1L), **caractérisé en ce que** le circuit intégré (21) comprend un circuit oscillateur (212) et un circuit de détection d'état du commutateur de clignotant (211) fournissant un signal de sortie lors de l'actionnement du commutateur de sélection de direction (3) et **en ce qu'**au moins l'un, du circuit oscillateur (212) et du circuit de détection d'état de commutateur de clignotant (211), comprend un circuit de traitement de signal (211A ; 212A) et un moyen de réduction de bruit (211B, 211C ; 211F ; 212B, 212C ; 212F) associé à celui-ci et étant situé physiquement de façon adjacente à celui-ci.

9. Système de clignotant selon la revendication 8, **caractérisé en ce qu'**il comprend un moyen de détection de courant (22) relié en série avec le commutateur de clignotant (23) et un circuit de détection de défaillance de lampe (213) dont une borne d'entrée est reliée à une sortie du moyen de détection de courant (22) et dont une borne de sortie est reliée à une borne de commande de fréquence du circuit oscillateur (212) et **en ce que** le circuit de détection de défaillance de lampe (213) comprend un circuit de traitement de signal (213A) et un moyen de réduction de bruit (213B, 213C) associé à celui-ci et situé physiquement de façon adjacente à celui-ci.

10. Système de clignotant selon la revendication 8 ou 9, **caractérisé en ce que** le circuit de traitement de signal (212A) du circuit oscillateur (212) est un comparateur dont une première entrée est reliée à la jonction entre un condensateur (24B) et une résistance (24A) d'un circuit d'application de constante de temps RC (24), dont une première extrémité est reliée à la première borne du moyen d'alimentation en énergie (5) qui se présente sous la forme d'une alimentation en énergie en courant continu et dont une seconde extrémité peut être reliée à la seconde borne du moyen d'alimentation en énergie (5) par l'intermédiaire d'un commutateur de mise à la masse (211A) commandé conformément à la sortie de signal provenant du commutateur de clignotant (23), la seconde borne d'entrée du circuit de traitement de signal (212A) du circuit oscillateur (212) étant reliée à une source de signal de référence pouvant être commandée (212D) et **en ce qu'**une borne de commande de la source de signal de référence (212D) est reliée à la sortie du circuit de détection de défaillance de lampe (213).

11. Système de clignotant selon la revendication 10, **caractérisé en ce qu'**une seconde borne de commande de la source de signal de référence pouvant être commandée (212D) est reliée à une borne de sortie du circuit de détection d'état de commutateur de clignotant (211).

12. Système de clignotant selon l'une des revendications 8 à 11, **caractérisé en ce que** le commutateur de clignotant (23) est commandé conformément à un signal de sortie fourni par une porte ET (214A), dont une première borne d'entrée est reliée à la sortie du circuit d'oscillateur (212) et dont une seconde borne d'entrée est reliée à une borne de sortie du circuit de détection d'état de commutateur de clignotant (211).
